# EUROPEAN PATENT SPECIFICATION

(11) **EP 2 827 405 B1**
(45) Date of publication and mention of the grant of the patent: **23.12.2015**
(21) Application number: 13820358.3
(22) Date of filing: 12.07.2013
(51) Int. Cl.: H01M 2/20, H01M 10/48, H01M 2/10

(54) **BATTERY WIRING MODULE**
BATTERIEVERKABELUNGSMODUL
MODULE DE CONNEXION DE BATTERIE

(30) Priority: 18.07.2012 JP 2012159341
(43) Date of publication of application: 21.01.2015
(73) Proprietor: AutoNetworks Technologies, Ltd., Yokkaichi-shi, Mie 510-8503 (JP); Sumitomo Wiring Systems, Ltd., Yokkaichi-shi, Mie-ken 510-8503 (JP); Sumitomo Electric Industries, Ltd., Osaka 541-0041 (JP)
(72) Inventor: NAKAYAMA, Osamu, Yokkaichi-shi Mie 510-8503 (JP); MORITA, Mitsutoshi, Yokkaichi-shi Mie 510-8503 (JP)
(74) Representative: Horn Kleimann Waitzhofer Patentanwälte PartG mbB
(86) International application number: PCT/JP2013/069105
(87) International publication number: WO 2014/013943

(56) References cited:
- EP-A1- 2 817 839
- WO-A1-2011/027917
- WO-A1-2012/036317
- JP-A- 2011 018 473
- JP-A- 2011 018 478
- JP-A- 2011 258 413
- JP-A- 2012 059 500
- US-A1- 2012 009 447

## Description

### TECHNICAL FIELD

The present invention relates to a battery wiring module.

### BACKGROUND ART

Generally, battery modules mounted, for example, on electric cars or hybrid vehicles are formed by serially connecting a large number of single cells via bus bars. In battery modules of this type, routing of electric wires for detecting the state of single cell groups (voltage, temperature, etc.) is needed.

As an example of such a battery module, a battery module that is assembled by attaching a battery wiring module provided with bus bars and an electric wire group to a single cell group in which a plurality of single cells are lined up is known. For example, a battery wiring module disclosed in JP 2011-008955 A includes a plurality of bus bars held at predetermined positions in a resin protector and a plurality of electric wires (electric wire group), in which the electric wire group is accommodated together in a wire accommodating groove provided in the resin protector.

EP 2 817 839 A discloses a wire arranging device that includes bus bars each interconnecting a plus and a minus terminal, in a first and a second terminal row, a first and a second row of bus bar containing rooms in which the bus bars are individually contained, a first and a second tray part respectively connected to the first and the second row of the bus bar containing rooms stacked on each other, first wires of which one ends are connected to the bus bars of the first row and placed on the first tray part, while the other ends are connected to a first connector at a second terminal row side, and second wires of which one ends are connected to the bus bars of the second row and placed on the second tray part, while the other ends are connected to a second connector at a first terminal row side.

### SUMMARY OF INVENTION

### Technical Problem

Meanwhile, there are cases where a plurality of battery modules are collectively arranged, or such a battery module is arranged together with an electric junction box. When arranging a plurality of battery modules, a member that holds electric wires for detecting the state of single cells, which constitute the battery modules, is routed to each of the battery modules.

Further, when arranging a battery module together with an electric junction box, a member that holds an electric wire group routed to the battery module and a member that holds an electric wire group connecting the electric junction box to a controller such as an electronic control unit (ECU) are both needed.

However, when members that accommodate and hold electric wires are provided for the respective battery modules, or members that accommodate and hold electric wires are provided separately for the electric junction box and the battery module, the number of parts increases, which leads to another problem of an increase in size.

Under such circumstances, the present invention has been accomplished, and an object of the present invention is to provide a battery wiring module capable of holding a plurality of electric wire groups without additional parts.

### Solution to Problem

In order to solve the above described problems, the present invention provides a battery wiring module configured to be attached to a single cell group in which a plurality of single cells having positive and negative electrode terminals are lined up, the battery wiring module including: a connecting member configured to connect adjacent ones of the electrode terminals; and a resin protector configured to hold the connecting member, wherein the resin protector includes a first wire holding part and a second wire holding part that are respectively capable of holding two types of electric wire groups, and the second wire holding part is configured such that it can cover the first wire holding part.

In the present invention, the battery wiring module has the resin protector provided with the first wire holding part and the second wire holding part capable of holding two types of electric wire groups, and the second wire holding part is arrangeable to cover the first wire holding part.

Accordingly, it is possible to allow the first wire holding part to hold one electric wire group first, thereafter attaching the second wire holding part to cover the first wire holding part, and finally to allow the second wire holding part to hold the other electric wire group. Therefore, an electric wire group that is connected to another battery module or an electric junction box can be held together by one resin protector. As a result, the present invention can provide a battery wiring module capable of holding two types of electric wire groups without additional parts.

The first wire holding part and the second wire holding part are integrally formed via a hinge.

Such a configuration enables the second wire holding part to be attached to cover the first wire holding part, for example, by folding the second wire holding part at the hinge. Thus, excellent workability is also achieved.

In the first wire holding part, one of the two types of electric wire groups that is to be routed first may be held.

With such a configuration, it is possible to allow the first wire holding part to hold the electric wire group that is to be routed first, over which the second wire holding part is attached to cover, and thereafter to allow the second wire holding part to hold the electric wire group that is to be routed subsequently. Thus, a high working efficiency is achieved.

One of the two types of electric wire groups may be composed of detection wires for detecting the state of the single cells.

Such a configuration enables one of the first wire holding part and the second wire holding part to accommodate the detection wires routed to the single cells that constitute the battery module.

### Advantageous Effects of Invention

According to the present invention, it is possible to provide a battery wiring module capable of holding two types of electric wire groups without additional parts.

### BRIEF DESCRIPTION OF DRAWINGS

Fig. 1 is a plan view of a battery module including a battery wiring module according to Embodiment 1.
Fig. 2 is a partial sectional view of the battery wiring module.
Fig. 3 is a partial enlarged view of Fig. 2.
Fig. 4 is a plan view of a battery module before electric wire groups are held by a first wire holding part and a second wire holding part.
Fig. 5 is a side view of the battery wiring module in the state shown in Fig. 4.
Fig. 6 is a plan view of a battery module in the state where an electric wire group is held by the first wire holding part.
Fig. 7 is a side view of the battery wiring module in the state shown in Fig. 6.

### DESCRIPTION OF EMBODIMENTS

### Embodiment 1

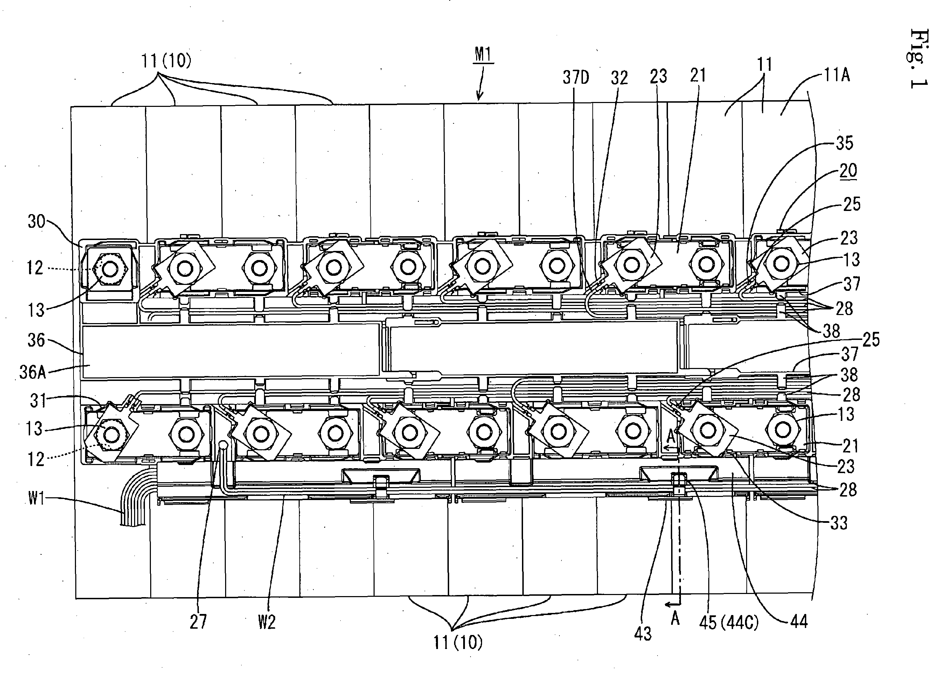

Embodiment 1 of the present invention is described with reference to Fig. 1 to Fig. 7.

A battery module M1 provided with a battery wiring module 20 of this embodiment is mounted on a vehicle (not shown) such as an electric car or a hybrid car so as to be used as a power source for driving the vehicle.

The battery module M1 has a single cell group 10 in which a plurality of single cells 11 including a connection terminal for detecting a voltage (not shown) and positive and negative electrode terminals 12 are lined up. The battery wiring module 20 provides electrical connection between the plurality of electrode terminals 12. Due to bolts 13 being attached to the electrode terminals 12, the electrode terminals 12 cannot be viewed from the top. Therefore, only the electrode terminals 12 provided in the single cell at the left end in Fig. 1 are shown by dotted lines.

In the following description, only one of a plurality of the same members may be denoted by a reference numeral, and reference numerals for other members may be omitted in some cases.

### Single cell 11

A single cell 11 has a flat, substantially rectangular parallelepiped shape, and accommodates a power generating element, which is not shown, thereinside. A pair of electrode terminals 12 and a connection terminal for detecting a voltage that is provided between the electrode terminals 12 are lined up in a line in the longitudinal direction on a top surface 11A of the single cell 11. The top surface 11A of the single cell 11 serves as an electrode surface 11A.

One of the electrode terminals 12 is a positive electrode terminal, and the other is a negative electrode terminal. The electrode terminal 12 that constitutes the positive electrode terminal and the electrode terminal 12 that constitutes the negative electrode terminal are the same in shape and size. The pair of electrode terminals 12 are provided in the vicinity of both ends, in the longitudinal direction, and include a terminal base (not shown) made of metal in which a hole is formed. Threaded portions (not shown) that are threadedly engageable with screw threads of the bolts 13 for connection to bus bars 21 are formed inside the holes. The single cells 11 are arranged so that adjacent electrode terminals 12 have different polarities. In Fig. 1, the plurality of single cells 11 are lined up from left to right so as to constitute the single cell group 10.

### Battery wiring module 20

The battery wiring module 20 includes a plurality of bus bars 21 (which are an example of the connecting member) made of metal that are connected to the positive and negative electrode terminals 12 of adjacent single cells 11, first voltage detection terminals 23 that are stacked on the bus bars 21 so as to be electrically connected thereto, and a resin protector 30 made of synthetic resin having bus bar holding parts 32 that hold the bus bars 21.

### Bus bar 21

A bus bar 21 is formed by pressing a plate material made of metal such as copper, copper alloy, stainless steel (SUS), and aluminum into a predetermined shape, and has a substantially rectangular shape as a whole, as shown in Fig. 1. The surface of the bus bar 21 may be plated with metal such as tin or nickel. The bus bar 21 has a pair of terminal insertion holes of substantially circular shape through which the bolts 13 for connection to the electrode terminals 12 are inserted. The holes are formed through the bus bar 21. These terminal insertion holes are designed to have slightly larger sizes than those of the electrode terminals 12. It should be noted that, since bolts are inserted through the terminal insertion holes, the holes are not depicted in the drawings.

With insertion of the bolts 13 through the terminal insertion holes, their screw threads are screwed into the holes of the electrode terminals 12, so that the bus bars 21 are sandwiched between the terminal base and the heads of the bolts 13, thereby establishing electrical connection between the electrode terminals 12 and the bus bars 21.

### Voltage detection terminal 23

A first voltage detection terminal 23 arranged to be stacked on a bus bar 21 has a substantially rectangular shape, and has one corner inserted into a through hole 33 that is provided in a bus bar holding part 32 (which will be described below) and two corners fitted into recesses 34, thereby being positioned with respect to the bus bars 21.

Further, the first voltage detection terminal 23 has an insertion hole around the center, through which the bolt 13 for connection is inserted when it is connected to the electrode terminal 12 and which is designed to coincide with the terminal insertion hole of the bus bar 21 when the first voltage detection terminal 23 is positioned with respect to the bus bar 21. Since a bolt is attached to the voltage detection terminal 23, the insertion hole is not depicted in the drawings.

A barrel part 25 that is connected to an end of voltage detection wire 26 (which will be described below) is extended from the first voltage detection terminal 23. The barrel part 25 is crimped in such a manner as to be wound around the core of the voltage detection wire 26, thereby establishing electrical connection between the first voltage detection terminal 23 and the voltage detection wire 26. The voltage detection wire 26 is connected to an ECU, or the like, which is not shown. The ECU, or the like, detects an electrode voltage of the single cell 11.

The first voltage detection terminal 23 is formed by pressing a plate material of metal such as copper, copper alloy, stainless steel, or aluminum into a predetermined shape. The surface of the first voltage detection terminal 23 may be plated with metal such as tin and nickel.

### Resin protector 30

The resin protector 30 is formed by coupling a plurality of coupling units 31, and has a long narrow shape in a direction in which the single cells 11 are lined up (left-right direction in Fig. 1), as shown in Fig. 1. The resin protector 30 is provided with a plurality of bus bar holding parts 32, lined up in two rows along its longitudinal direction, which are open upwardly and have partition walls that serve as partitions from the outside and that are capable of holding the bus bars 21.

In each of the bus bar holding parts 32, the through hole 33 through which one corner of the first voltage detection terminal 23 passes and the two recesses 34 into which other corners are fitted are formed, and a barrel holding part 32 in the form of a groove that holds the barrel part 25 of the first voltage detection terminal 23 is formed extending in an oblique direction with respect to the longitudinal direction of the bus bar holding part 32. This allows the first voltage detection terminal 23 to be set obliquely to a direction in which the bus bars 21 are lined up.

Further, a detection terminal holding part 36 that accommodates and holds the second voltage detection terminal connected to the connection terminal is provided between the two rows of the bus bar holding parts 32, though it is not shown in detail. A cover 36A is attached to the detection terminal holding part 36.

A pair of wire accommodating grooves 37 for accommodating the voltage detection wires 26 connected to the first voltage detection terminal 23 and the second voltage detection terminal are provided between the detection terminal holding part 36 and the bus bar holding parts 32 on both sides thereof, with the detection terminal holding part 36 interposed therebetween along the longitudinal direction of the resin protector 30.

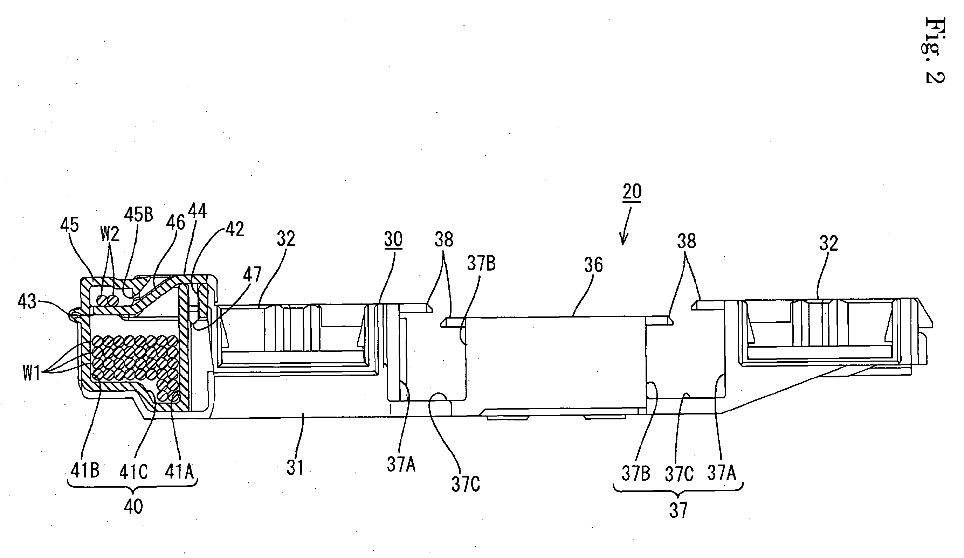

Each wire accommodating groove 37 has a pair of groove walls 37A and 37B, and a bottom 37C connecting these walls, as shown in Fig. 2, and is capable of accommodating a plurality of voltage detection wires 26 thereinside. Of the pair of groove walls 37A and 37B, a groove wall 37A on the bus bar holding part 32 side is configured to have a raised height from the bottom 37C that is greater than that of the groove wall 37B on the detection terminal holding part 36 side.

Further, the groove wall 37A on the bus bar holding part 32 side is provided with a first wire insertion portion 37D for introducing the voltage detection wires 26 from the bus bar holding part 32 side into the wire accommodating groove 37. The barrel holding part 32 described above is continuous with the first wire insertion portion 37D, thereby rendering the bus bar holding part 32 and the wire accommodating groove 37 in a coupled state.

On the other hand, of the pair of groove walls 37A and 37B, the groove wall 37B on the detection terminal holding part 36 side is provided with a second wire insertion portion (not shown) for introducing the voltage detection wires 26 from the detection terminal holding part 36 side into the wire accommodating groove 37.

At the respective upper edges of the pair of groove walls 37A and 37B of the wire accommodating groove 37, a pair of restricting pieces 38 that keep the voltage detection wires 26 from sticking out from the wire accommodating groove 37 are provided, projecting toward their opposed groove walls 37A and 37B, respectively, at the same position in the length direction of the wire accommodating groove 37 but at different height positions in the depth direction of the wire accommodating groove 37.

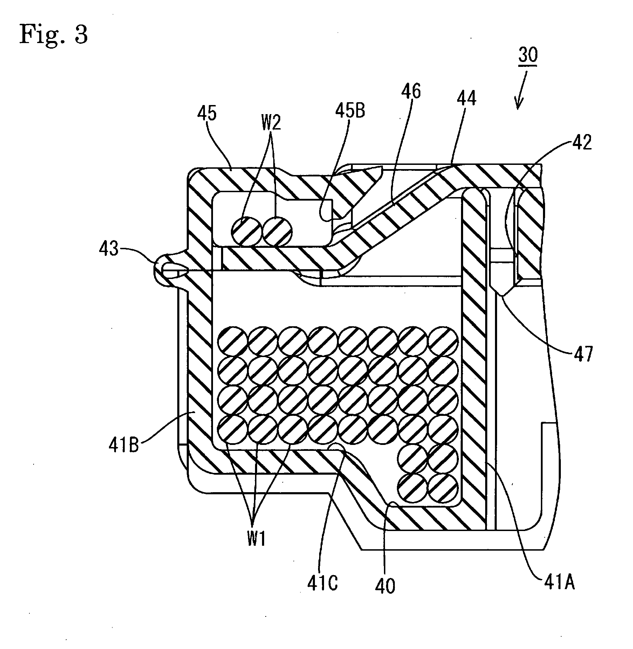

In this embodiment, the resin protector 30 is provided with a first wire holding part 40 and a second wire holding part 44 that are respectively capable of holding two types of electric wire groups W1 and W2. The first wire holding part 40 is provided continuously from the bus bar holding part 32 on the near side in Fig. 1. The first wire holding part 40, which is in the form of a groove as a whole, has a pair of holding walls 41A and 41B, and a bottom 41C connecting the pair of holding walls 41A and 41B, as shown in Fig. 2 and Fig. 3, and accommodates an electric wire group W1 thereinside. The electric wire group W1 accommodated and held in the first wire holding part 40 is routed to a battery module other than the battery module M1 of this embodiment (which is not shown and may be referred to also as "another battery module").

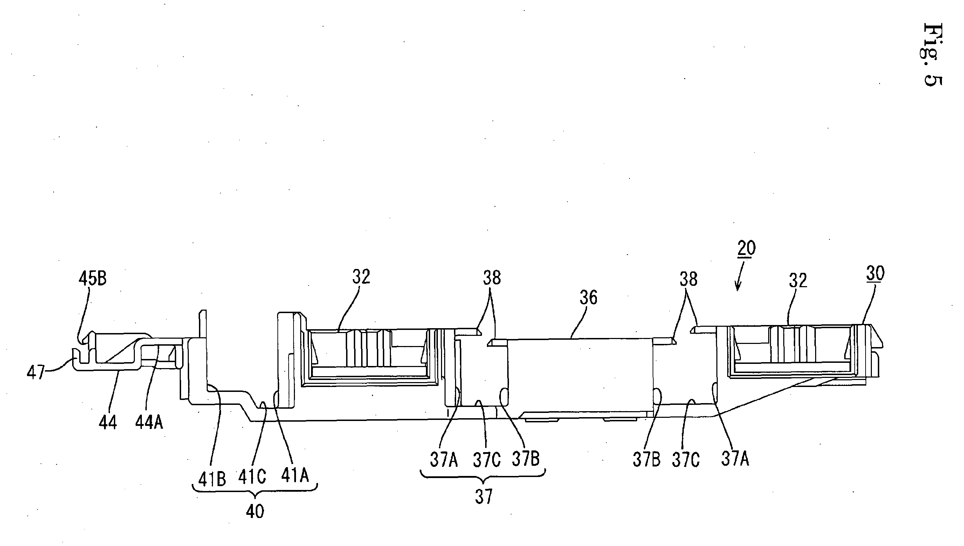

The bottom 41C of the first wire holding part 40 has a stepped shape in which the height on the bus bar holding part 32 side is lower, as shown in Fig. 5. In a holding wall 41A on the bus bar holding part 32 side of the first wire holding part 40, an engaging hole 42 is formed that receives an engaging projection 47 formed on the second wire holding part 44 and engages the engaging projection 47 (see Fig. 3 to Fig. 5).

The second wire holding part 44 is continuous, via a hinge 43, to the upper edge of a holding wall 41B on the opposite side of the bus bar holding part 32 of the first wire holding part 40. As shown in Fig. 3, the second wire holding part 44 can be arranged to cover the first wire holding part 40.

An electric wire group W2 other than the electric wire group W1 held in the first wire holding part 40 is held in the second wire holding part 44. The electric wire group W2 held in the second wire holding part 44 is composed of detection wires 28 to which a thermistor 27 for detecting a temperature (state) of the single cell group 10 that constitutes the battery module M1 of this embodiment is connected.

In the second wire holding part 44, when a region 44A on the hinge 43 side with respect to the substantial center in the width direction and a region 44B on the opposite side of the hinge 43 with respect to the substantial center in the width direction are compared, the region 44A on the hinge 43 side is set to have a smaller height dimension in the state where the second wire holding part 44 is attached to cover the first wire holding part 40 (see Fig. 2 and Fig. 3). The electric wire group W2 is held in the region 44A on the hinge 43 side.

A projecting piece 45 surrounded by a U-shaped slit 45A and projecting upwardly in Fig. 2 is formed on the side edge of the second wire holding part 44 on the hinge 43 side. A projection projecting in a direction that is oriented to the first wire holding part 40 side when the second wire holding part 44 is attached to cover the first wire holding part 40 is formed on the projecting piece 45, as shown in Fig. 2 and Fig. 3. This projection is a wire holding projection 45B having a function to hold the electric wire group W2 accommodated in the second wire holding part 44. It should be noted that Fig. 2 depicts parts of the battery wiring module 20 other than the first wire holding part 40 and the second wire holding part 44 as viewed from the side, and depicts the first wire holding part 40 and the second wire holding part 44 as a sectional view taken along the line A shown in Fig. 1.

In a region 44C of the second wire holding part 44 which includes a portion where the projecting piece 45 is formed, an inclined surface 46 with a height dimension increasing toward the side edge on the opposite side of the hinge 43 is formed. The electric wire group W2 is guided to below the projecting piece 45 by the inclined surface 46.

Further, on the side edge of the second wire holding part 44 on the opposite side of the hinge 43, the engaging projection 47 is provided at a position corresponding to the engaging hole 42 formed on the holding wall 41A of the first wire holding part 40.

### Assembly method of battery wiring module 20

When assembling the above described battery wiring module 20 of this embodiment, the bus bars 21 are first accommodated within the bus bar holding parts 32 of the resin protector 30.

Next, the first voltage detection terminals 23 are attached to the resin protector 30. Specifically, in the state where the barrel parts 25 of the voltage detection terminals are crimped to the voltage detection wires 26, the first voltage detection terminals 23 are accommodated from above at a predetermined position in the bus bar holding parts 32 of the resin protector 30, so as to be stacked on the bus bars 21. Then, the barrel parts 25 of the voltage detection terminals are held in the barrel holding parts 32 of the resin protector 30, and the voltage detection wires 26 are introduced through the first wire insertion portion 37D into the wire accommodating groove 37.

Next, the second voltage detection terminals are placed in the detection terminal holding parts 36, and the voltage detection wires 26 connected to the second voltage detection terminals are introduced into the wire accommodating groove 37 in the same manner as above.

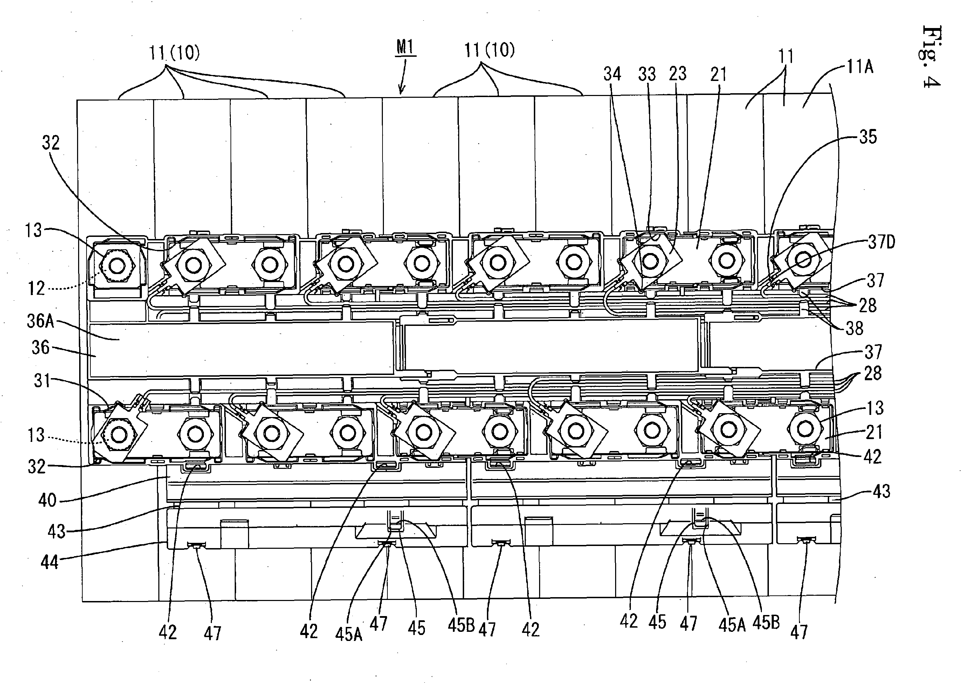

The battery wiring module 20 of this embodiment assembled as above is placed on the top surface 11A side of the single cell group 10 whose cells are lined up with the electrode terminals 12 and the connection terminals facing upward. Next, the bolts 13 for connection are inserted through the insertion holes of the first voltage detection terminals 23 and the terminal insertion holes of the bus bars 21, and bolts (not shown) for connection of the same type as above are inserted through the insertion holes (not shown) of the second voltage detection terminals, thereby establishing electrical connection between adjacent positive and negative electrode terminals 12, between the first voltage detection terminals 23 and the electrode terminals 12, and between the connection terminals and the second voltage detection terminals. Thus, the battery module M1 is completed. Then, the cover 36A of the detection terminal holding part 36 is closed, and the state shown in Fig. 4 is achieved.

### Holding method of electric wire groups W1 and W2

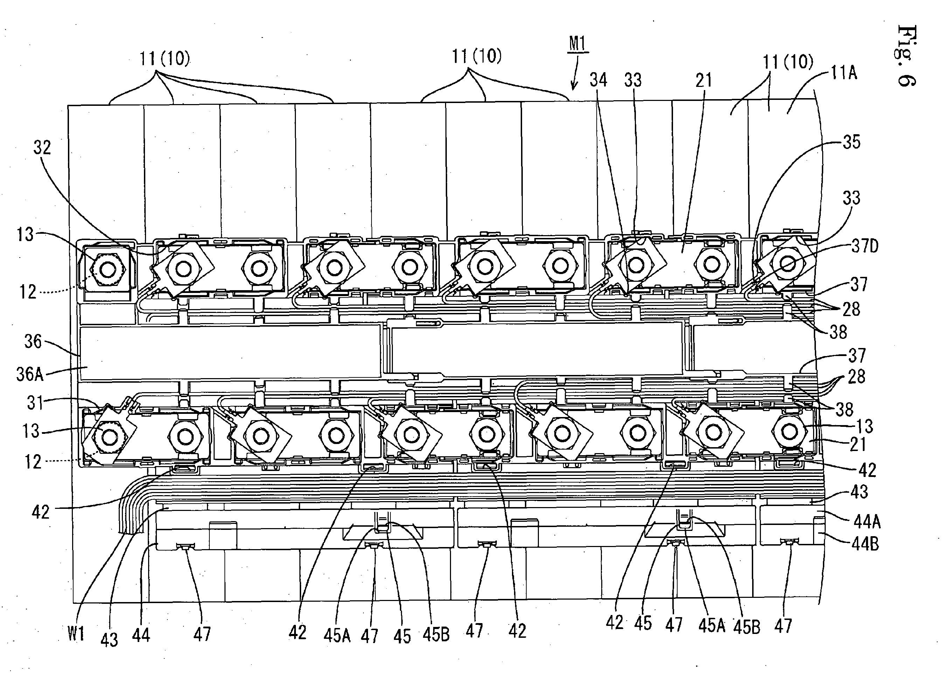

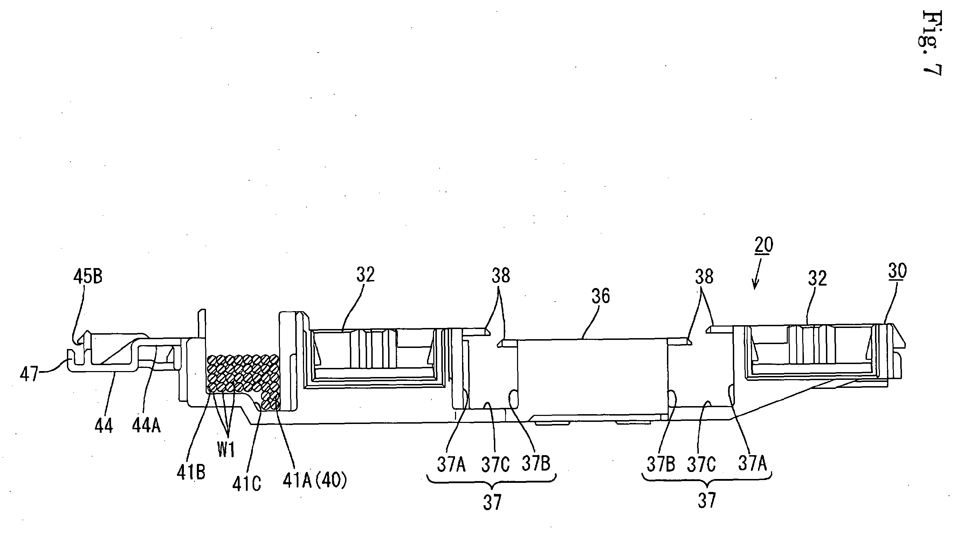

Next, when the electric wire group W1 routed to another battery module is accommodated in the first wire holding part 40, the state shown in Fig. 6 is achieved. It should be noted that Fig. 7 shows a state where the electric wire group W1 is accommodated in the first wire holding part 40, though the voltage detection wires 26 accommodated in the wire accommodating groove 37 are omitted.

Next, the second wire holding part 44 is folded at the hinge 43 so as to be attached to cover the first wire holding part 40, and the engaging projection 47 of the second wire holding part 44 is fitted into the engaging hole 42 formed on the holding wall 41A of the first wire holding part 40 on the bus bar holding part 32 side, thereby allowing the engaging projection 47 to be engaged by the hole edge of the engaging hole 42.

Subsequently, the thermistor 27 that has been connected to the detection wires 28 in advance is attached to the battery wiring module at a predetermined position. In this embodiment, the thermistor 27 is arranged between the bus bar holding part 32 at the left end and the second bus bar holding part 32 from the left in the row on the near side in Fig. 1. Next, the detection wires 28 to which the thermistor 27 is connected are accommodated in the second wire holding part 44. At this time, the electric wire group W2 composed of the detection wires 28 is guided to below the projecting piece 45 by the inclined surface 46 in the region 44C that includes the portion where the projecting piece 45 is formed. In this way, the electric wire group W2 composed of the detection wires 28 is accommodated in the second wire holding part 44, and the state shown in Fig. 1, that is, the state where the two types of electric wire groups W1 and W2 are held by the first wire holding part 40 and the second wire holding part 44 is achieved.

### Actions and effects of this embodiment

In this embodiment, the battery wiring module 20 has the resin protector 30 provided with the first wire holding part 40 and the second wire holding part 44 that are capable of holding two types of the electric wire groups W1 and W2, and the second wire holding part 44 can be arranged to cover the first wire holding part 40.

Accordingly, this embodiment enables a single resin protector 30 to hold the electric wire group W1 that is connected to another battery module, and therefore it is possible to provide a battery wiring module 20 that is capable of holding two types of the electric wire groups W1 and W2 without additional parts.

Further, according to this embodiment, the first wire holding part 40 and the second wire holding part 44 are integrally formed via the hinge 43, and therefore it is possible to attach the second wire holding part 44 so as to cover the first wire holding part 40, for example, by folding the second wire holding part 44 at the hinge 43. Thus, excellent workability is achieved.

Further, according to this embodiment, the electric wire group W1 that is to be routed first, among the two types of electric wire groups W1 and W2, is held in the first wire holding part 40. Therefore, it is possible to allow the first wire holding part 40 to hold the electric wire group W1 that is to be routed first, over which the second wire holding part 44 is attached to cover, and thereafter to allow the second wire holding part 44 to hold the electric wire group W2 that is to be routed subsequently. Thus, a high working efficiency is achieved.

Further, according to this embodiment, one of the two types of electric wire groups W1 and W2 is composed of the detection wires 28 for detecting a state of the single cells 11. Therefore, the detection wires 28 routed to the single cells 11 that constitute the battery module M1 can be accommodated in the second wire holding part 44.

### Other embodiments

The present invention is not limited to the foregoing embodiments explained above by way of the description and drawings. For example, the following embodiments are also included within the technical scope of the present invention.
(1) In the above-described embodiment, the first wire holding part 40 and the second wire holding part 44 are integrally formed via the hinge 43. However, the second wire holding part may be a separate part from the first wire holding part.
(2) The above-described embodiment shows an example in which the electric wire group W1 routed to another battery module is held and accommodated in the first wire holding part 40. However, there is no limitation to this. An electric wire group routed to an electric junction box may be held in the first wire holding part, or detection wires connected to a single cell group to which the battery wiring module is attached may be held therein.
(3) The above-described embodiment shows an example in which the electric wire group W2 composed of the detection wires 28 that are connected to the thermistor 27 is held and accommodated in the second wire holding part 44. However, there is no limitation to this. Detection wires that are connected to a voltage detection terminal for detecting a voltage may be held in the second wire holding part, or an electric wire group routed to another battery module or an electric junction box may be held therein.

### LIST OF REFERENCE SIGNS

M1: Battery module
10: Single cell group
11: Single cell
12: Electrode terminal
20: Battery wiring module
21: Bus bar (connecting member)
27: Thermistor
28: Detection wire
30: Resin protector
40: First wire holding part
41A, 41B: Holding wall
41C: Bottom
42: Engaging hole
43: Hinge
44: Second wire holding part
44A: Region on hinge side with respect to substantial center in the width direction
44B: Region on the opposite side of hinge with respect to substantial center in the width direction
44C: Region including portion where projecting piece is formed
45: Projecting piece
45B: Wire holding projection
46: Inclined surface
47: Engaging projection
W1: Electric wire group (of another battery module)
W2: Electric wire group (composed of detection wires)

## Claims

1. A battery wiring module (20) configured to be attached to a single cell group (10), in which a plurality of single cells (11) having positive and negative electrode terminals (12) are lined up, the battery wiring module (20) comprising:
a connecting member (21) configured to connect adjacent ones of the electrode terminals (12); and
a resin protector (30) configured to hold the connecting member (21), wherein:
the resin protector (30) includes a first wire holding part (40) and a second wire holding part (44) that are respectively capable of holding two types of electric wire groups (W1, W2), and
the second wire holding part (44) is configured such that it can cover the first wire holding part (40),
**characterized in that** the first wire holding part (40) and the second wire holding part (44) are integrally formed via a hinge (43).

2. The battery wiring module (20) according to claim 1, wherein
one of the two types of electric wire groups (W1, W2) is composed of detection wires (28) for detecting a state of the single cells (11).

## Patentansprüche

1. Batterieverkabelungsmodul (20), das eingerichtet ist, an einer einzelnen Zellengruppe (10) befestigbar zu sein, bei welcher mehrere einzelne Zellen (11) aufgereiht sind, die positive und negative Elektrodenanschlüsse (12) aufweisen, wobei das Batterieverkabelungsmodul (20) aufweist:
ein Verbindungselement (21), welches eingerichtet ist, angrenzende Elektrodenanschlüsse (12) zu verbinden; und
einen Kunststoffprotektor (30), welcher eingerichtet ist, das Verbindungselement (21) zu halten, wobei:
der Kunststoffprotektor (30) einen ersten Drahthalteabschnitt (40) und einen zweiten Drahthalteabschnitt (44) umfasst, welche jeweils zum Halten von zwei Arten von elektrischen Drahtgruppen (W1, W2) geeignet sind, und
der zweite Drahthalteabschnitt (44) derart eingerichtet ist, dass er den ersten Drahthalteabschnitt (40) bedecken kann,
**dadurch gekennzeichnet, dass**
der erste Drahthalteabschnitt (40) und der zweite Drahthalteabschnitt (44) einstückig über ein Gelenk (43) gebildet sind.

2. Batterieverkabelungsmodul (20) gemäß Anspruch 1, wobei
eine der zwei Arten von elektrischen Drahtgruppen (W1, W2) aus Detektionsdrähten (28) zum Detektieren eines Zustands der einzelnen Zellen (11) zusammengesetzt ist.

## Revendications

1. Module de câblage de batterie (20) configuré pour être fixé à un groupe d'éléments individuels (10), dans lequel une pluralité d'éléments individuels (11) ayant des bornes d'électrodes positives et négatives (12) est alignée, le module de câblage de batterie (20) comprenant :
un élément de connexion (21) configuré pour connecter des bornes d'électrodes voisines (12) ; et
un élément de protection en résine (30) configuré pour maintenir l'élément de connexion (21), dans lequel :
l'élément de protection en résine (30) comprend une première partie de maintien de fils (40) et une seconde partie de maintien de fils (44) qui sont respectivement aptes à maintenir deux types de groupes de fils électriques (W1, W2), et
la seconde partie de maintien de fils (44) est configurée de manière à pouvoir recouvrir la première partie de maintien de fils (40),
**caractérisé en ce que** la première partie de maintien de fils (40) et la seconde partie de maintien de fils (44) sont formées d'un seul tenant au moyen d'une charnière (43).

2. Module de câblage de batterie (20) selon la revendication 1, dans lequel :
l'un des deux types de groupes de fils électriques (W1, W2) est composé de fils de détection (28) destinés à détecter un état des éléments individuels (11).
